Europäisches Patentamt

European Patent Office

Office européen des brevets

(11) Publication number: 0 224 341
A1

## (12) EUROPEAN PATENT APPLICATION

(21) Application number: 86308438.0

(22) Date of filing: 29.10.86

(51) Int. Cl.⁴: F 16 D 55/14
F 16 D 65/22

(30) Priority: 21.11.85 GB 8528682

(43) Date of publication of application:
03.06.87 Bulletin 87/23

(84) Designated Contracting States: DE FR GB IT

(71) Applicant: LUCAS INDUSTRIES public limited company
Great King Street
Birmingham, B19 2XF West Midlands (GB)

(72) Inventor: Price, Anthony George
14 Meadow Lane Croesyceiliog
Cwmbran Gwent NP44 2EY Wales (GB)

Parry, David
39 Marlborough Road Maes/y/Rhiw
Cwmbran Gwent Wales (GB)

Campbell, Roy
The Corner House 1 Marlbrook Lane Licky Rock
Bromsgrove Worcestershire (GB)

(74) Representative: Spall, Christopher John et al
BARKER, BRETTELL & DUNCAN 138 Hagley Road
Edgbaston Birmingham B16 9PW (GB)

(54) Improvements in self-energising disc brakes.

(57) A self-energising disc brake of the spreading type is adapted to be actuated by a mechanical brake applying mechanism comprising a first component (50) and a second component (51) which are articulated together. The second component (51) is coupled to a pivotally mounted lever (41) for applying the brake and the first component (50) has a sealing engagement in a bore (53) in which it is either guided for axial sliding movement, or is rotatable, in turn to cause angular movement of the lever (41) in a brake-applying direction.

FIG.1

**Description**

IMPROVEMENTS IN SELF-ENERGISING DISC BRAKES

This invention relates to self-energising disc brakes of the kind in which rotatable friction discs provided with linings of friction material are adapted to be brought into engagement with spaced opposed braking surfaces in a housing by pressure plates located between the friction discs and centred by stationary pilot lugs, balls or rollers are located in co-operating oppositely inclined recesses in the adjacent faces of the pressure plates, and the application of the brake is initiated by moving the pressure plates angularly in opposite directions, the pressure plates then moving apart, due to the tendency for the balls or rollers to ride up ramps defined by the edges of the recesses, and into engagement with the friction discs which are urged into engagement with braking surfaces, and the pressure plates are carried round with the friction discs until one is arrested by the engagement of a lug on the plate with a drag-taking stop abutment in the housing, the continued angular movement of the other pressure plate providing a servo action.

Self-energising brakes of the kind set forth may be dry or they may be of the liquid cooled type, and such brakes are commonly used in tractors and like vehicles and are hereinafter called brakes of the kind set forth.

Self-energising brakes of the kind set forth are adapted to be actuated mechanically by means of a mechanical mechanism, suitably for applying the brake for parking or in an emergency.

In some known constructions each mechanical mechanism comprises a pull-rod in the form of a single component which extends into the brake through a radial opening in the housing and at its inner end is coupled to a pivotally mounted lever which is angularly movable in response to movement of the pull-rod in a generally radial direction in order to move the pressure plates angularly relative to each other to initiate application of the brake.

In such known constructions there is a difficulty in making a satisfactory seal between the pull-rod and the radial opening due to tendency for the pull-rod to adopt a progressively increasing non-radial altitude as the linings wear.

According to our invention in a self-energising brake of the kind set forth a mechanical brake-applying mechanism comprises a first component, a second component, and an articulating coupling between the two components, the second component being coupled to a pivotally mounted brake-applying lever, and the first component having a sealing engagement in a bore in the housing in which it is movable in such a direction as to input a generally radial movement to the second component, in turn to cause angular movement of the lever in a brake-applying direction.

The first component may be guided for axial sliding movement in a radial bore in the housing, with the articulating connection comprising a pivotal coupling between the inner end of the first component and the outer end of the second component.

In such a construction the first component may be slidably guided through a seal in the radial bore.

In another construction the first component may be mounted for angular movement in an axially extending bore in the housing and incorporates an arm which is pivotally coupled to the second component.

In such a construction the first component is angularly movable in a seal in the axially extending bore.

Our invention has the advantage that an effective seal is provided between the first component and the housing, by the provision of a simple seal, and the displacement of the lever due to wear of the friction linings is accommodated by the articulating connection between the two components.

Two embodiments of our invention are illustrated in the accompanying drawings in which:-

Figure 1 is an end view of a portion of a spreading brake;

Figure 2 is a plan view of the same;

Figure 3 is an end view similar to Figure 1 but showing a different construction.

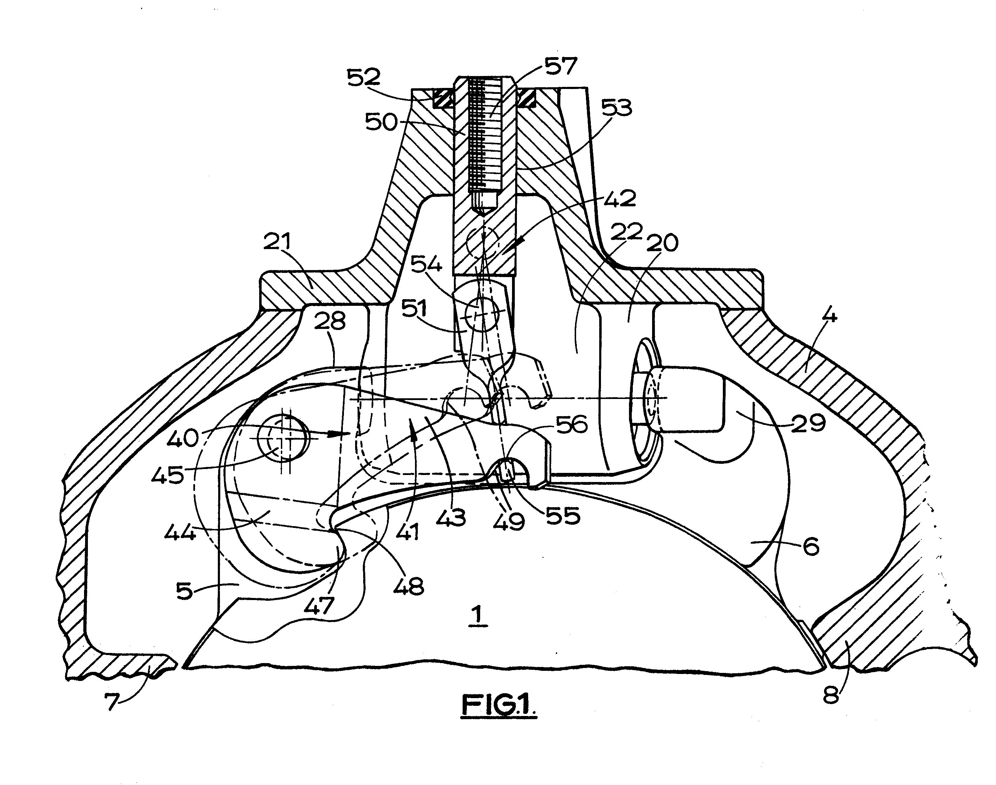

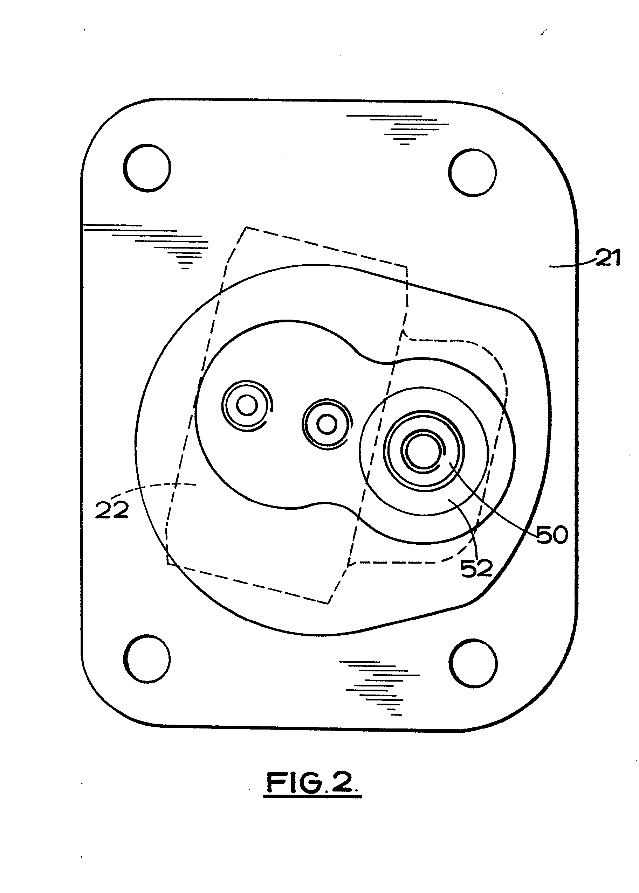

The brake illustrated in Figures 1 and 2 of the drawings is of a conventional spreading type in which two rotatable friction discs 1 provided with friction linings and splined on a shaft are adapted to be brought into engagement with spaced opposed braking surfaces in a housing 4 by pressure plates 5, 6 located between the discs 1 and centred by three angularly spaced stationary pilots of which only two are shown at 7 and 8. Balls are located in co-operating oppositely inclined recesses in the adjacent faces of the pressure plates 5, 6.

The application of the brakes is initiated by moving the pressure plates 5, 6 angularly in opposite directions which causes the pressure plates 5, 6 to move axially relatively away from each other due to the tendency for the balls 10 to ride up ramps defined by the end faces of the recesses. This urges the friction discs 1, 2 into engagement with the opposed braking faces in the housing 4. The pressure plates 5, 6 are then carried round with the discs 1, 2 until one is arrested by the engagement of a lug on a respective plate 5, 6 with a drag-taking abutment constituted by the pilot (not shown), whereafter continued angular movement of the other plate provides a servo action.

A radial opening 20 in the housing 4 is closed by a cover plate 21 which provides a mounting for an hydraulic actuator 22 by means of which the brake is adapted to be applied hydraulically.

The hydraulic actuator 22 conveniently forms the subject of our G.B. patent application No. 8506163 and need not be described further except for stating that the actuator 22 has an open-ended longitudinal through-bore in which work a pair of oppositely acting pistons for engagement with lugs 28, 29.

A mechanical brake-applying mechanism 40 is provided for applying the brake manually for parking or in an emergency. As illustrated, the mechanism 40 comprises a lever 41 in the form of a bell-crank, and a pull-rod assembly 42 coupled to the lever 41.

The lever 41 has a longer arm 43 and a shorter arm 44 and is pivotally connected to the lug 28 by means of a pivot pin 45. The shorter arm 44 extends in a generally radial direction and is provided with a curved nose 47 which has a rolling engagement with a radial face 48 on the pressure plate 6. The longer arm 43 extends in a generally circumferential direction and adjacent to its free end a notch 49 of arcuate outline is provided in the radially innermost edge of the lever 40.

The pull-rod assembly 42 comprises an outer component 50, and an inner component 51. The outer component 50 is guided for sliding movement in a radial direction through a seal 52 at the outer end of a radial bore 53 in the plate 21 and has a inner end which is pivotally mounted in the bifurcated outer end of the inner component 51 by means of a pivot pin 54. The inner end of the inner component 51 has a loop 55 which encircles the free end of the arm 43. A bearing face 56 of arcuate outline on the inner face of the loop 55 has a rocking and sliding engagement with a complementary arcuate face defining the notch 49.

The outer component 50 has an axially extending threaded bore 57 which receives a threaded portion of a transmission mechanism leading to a brake lever or pedal and by operation of which the brake can be applied mechanically. The effective length of the transmission mechanism can be adjusted to compensate for wear of the friction linings by screwing the threaded portion further into the bore 57.

When the brake is to be applied by the mechanism 40, the outer component 50 is withdrawn relatively from the housing 4 in a radial direction with the component 50 sliding through the axial bore, and that movement is transmitted to the inner component 51 through the pivot pin 54, in turn to move the lever 41 angularly about the pin 45 as a pivot. The nose 47 acts on the face 48 to urge the plate 6 in one direction, and the reaction on the pin 45 acts to urge the plate 5 in the opposite direction. Relative angular movement between the plates 5, 6 in opposite direction initiates application of the brake as described above.

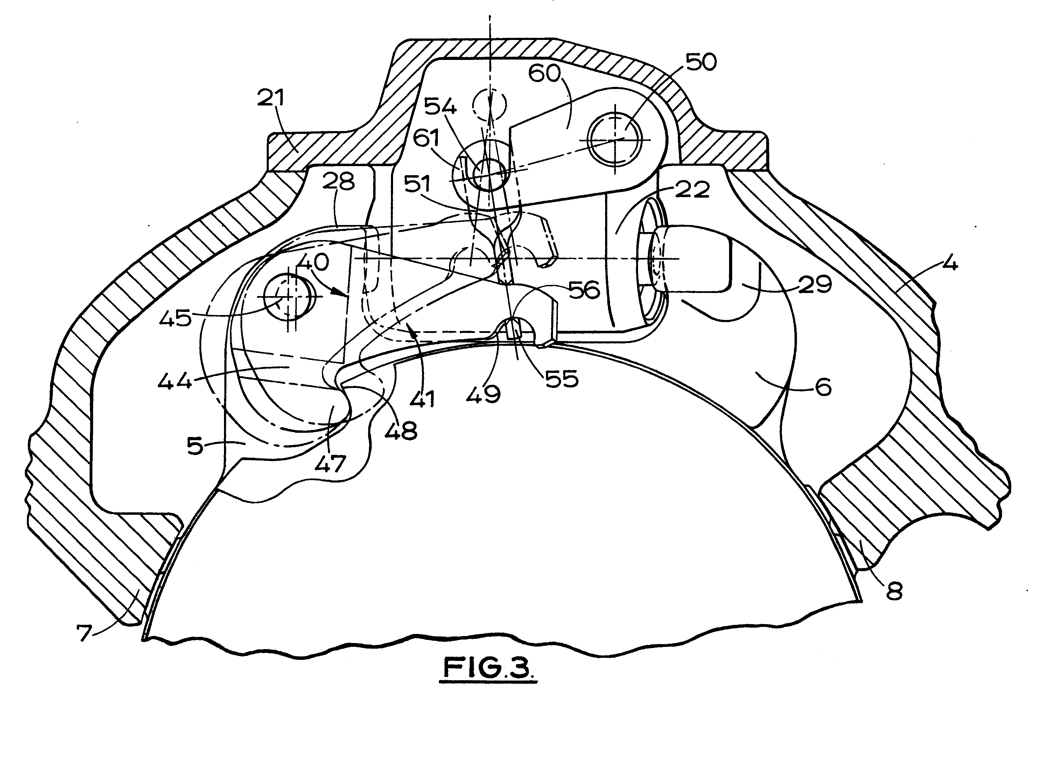

In the construction of Figure 3 the outer component 50 is angularly movable in an axially extending bore in the housing 4 for limited rotation. The outer component incorporates a rigid arm 60 of which the outer end is formed with a hook-like formation 61 which engages pivotally with the pivot pin 54 in the bifurcated outer end of the inner component 51.

In this construction angular movement of the component 50 about its axis imparts a generally radial movement to the inner component 51 to move the lever 41 angularly as described above.

The construction and operation of the mechanism of Figure 3 is otherwise the same as that of Figures 1 and 2, and corresponding reference numerals have been applied to corresponding parts.

In the constructions described above the plate 21 may be integral with the housing 4.

In another construction the hydraulic actuator 22 may be omitted with the mechanism 40 utilised for normal service brake construction. In such a construction the actuator 22 may be operated by an add-on hydraulic unit.

In a modification the mounting for the mechanism 40 may be entirely separate from the actuator 22.

## Claims

1. A self-energising disc brake in which rotatable friction discs (1) provided with linings of friction material are adapted to be brought into engagement with spaced opposed braking surfaces in a housing (4) by pressure plates (5, 6) located between the friction discs and centred by stationary pilot lugs (7, 8), balls or rollers (10) are located in co-operating oppositely inclined recesses in the adjacent faces of the pressure plates, and the application of the brake is initiated by moving the pressure plates angularly in opposite directions, the pressure plates then moving apart, due to the tendency for the balls or rollers to ride up ramps defined by the edges of the recesses, and into engagement with the friction discs which are urged into engagement with the braking surfaces, and the pressure plates are carried round with the friction discs until one is arrested by the engagement of a lug on the plate with a drag-taking stop abutment in the housing, the continued angular movement of the other pressure plate providing a servo action, characterised by a mechanical brake-applying mechanism (40) comprising a first component (50), a second component (51, 60), and an articulating coupling (54) between the two components, the second component being coupled to a pivotally mounted brake-applying lever (41), and the first component having a sealing engagement in a bore (53) in the housing (4) in which it is movable in such a direction as to input a generally radial movement to the second component, in turn to cause angular movement of the lever in a brake-applying direction.

2. A brake according to Claim 1, characterised in that the first component (50) is guided for axial sliding movement in a radial bore (53) in the housing, with the articulating connection comprising a pivotal coupling (54) between the inner end of the first component (50) and the outer end of the second component (51).

3. A brake according to Claim 2, characterised in that the first component (50) is slidably guided through a seal (52) in the radial bore.

4. A brake according to Claim 1, characterised in that the first component (50) is mounted for angular movement in an axially extending bore in the housing (4) and incorporates an arm (60) which is pivotally coupled to the second component (51).

5. A brake according to Claim 4, characterised in the first component (50) is angularly movable in a seal in the axially extending bore.

0224341

FIG1.

0224341

FIG.2.

0224341

FIG.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-4 407 394 (ALLORI)<br>* column 3, lines 2-6; figures 2, 4 * | 1,4,5 | F 16 D 55/14<br>F 16 D 65/22 |
| | --- | | |
| A | FR-A- 882 100 (ARGUS-MOTOREN)<br>* whole document * | 2,3 | |
| | --- | | |
| A | AT-A- 310 014 (DEUTSCHE PERROT-BREMSE)<br>* page 3, lines 21. 22; figure 2 * | 1-3 | |
| | --- | | |
| A | DE-C- 740 902 (KLAUE)<br>* whole document * | 1,4,5 | |
| | --- | | TECHNICAL FIELDS SEARCHED (Int. Cl.4) |
| A | GB-A- 913 624 (LAMBERT BRAKE CORP.)<br>* whole document * | 2,3 | F 16 D 55/00<br>F 16 D 65/00 |
| | ----- | | |

The present search report has been drawn up for all claims

| Place of search | Date of completion of the search | Examiner |
|---|---|---|
| BERLIN | 27-01-1987 | KIESLINGER |